(19) Europäisches Patentamt
European Patent Office
Office européen des brevets

(11) EP 2 118 155 B1

(12) **FASCICULE DE BREVET EUROPEEN**

(45) Date de publication et mention de la délivrance du brevet:
**05.11.2014 Bulletin 2014/45**

(21) Numéro de dépôt: **08762124.9**

(22) Date de dépôt: **19.02.2008**

(51) Int Cl.:
***C08F 220/60*** $^{(2006.01)}$ ***D21H 17/45*** $^{(2006.01)}$

(86) Numéro de dépôt international:
**PCT/FR2008/050277**

(87) Numéro de publication internationale:
**WO 2008/113934 (25.09.2008 Gazette 2008/39)**

(54) **COPOLYMERES CATIONIQUES DERIVES D'ACRYLAMIDE ET LEURS UTILISATIONS**

KATIONISCHE COPOLMERE AUS ACRYLAMIDEN UND IHRE VERWENDUNG

CATIONIC COPOLYMERS DERIVED FROM ACRYLAMIDES AND USE THEREOF

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.02.2007 FR 0753347**
**12.03.2007 FR 0753770**

(43) Date de publication de la demande:
**18.11.2009 Bulletin 2009/47**

(73) Titulaire: **S.P.C.M. SA**
**42160 Andrézieux Bouthéon (FR)**

(72) Inventeurs:
- **HUND, René**
  **F-42390 Villars (FR)**
- **JEHN-RENDU, Christian**
  **69214 Eppelheim (DE)**

(74) Mandataire: **Denjean, Eric et al**
**Cabinet Laurent & Charras**
**"Le Contemporain"**
**50, Chemin de la Bruyère**
**69574 Dardilly Cedex (FR)**

(56) Documents cités:
**WO-A1-2006/016906 FR-B1- 2 880 901**

- **DATABASE WPI Week 199619 Thomson Scientific, London, GB; AN 1996-185499 XP002490514 & JP 08 060593 A (JAPAN CARLIT CO LTD) 5 mars 1996 (1996-03-05)**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 118 155 B1

**Description**

L'invention concerne une solution aqueuse comprenant un copolymère cationique d'acrylamide obtenu par réaction de dégradation dite d'Hofmann, à l'aide d'un hydroxyde alcalin et/ou alcalino terreux et d'un hypohalogénure alcalin et/ou alcalino terreux, et l'utilisation de ces copolymères principalement comme agents de résistance pour le papier et/ou agents de coagulation.

Plus précisément, selon l'invention, les copolymères cationiques d'acrylamide sont des polymères organiques caractérisés en ce qu'ils sont obtenus :

- par réaction de dégradation dite d'Hofmann en solution aqueuse,
- et en ce qu'il comporte une teneur en sel réduite caractérisée par un coefficient de désalination (Cd) supérieur à 0,6, de préférence supérieur à 0,65, avantageusement supérieur à 0,7, avec Cd égal à :

$$\frac{\textit{Matière active réelle polymérique (en poids \%) x Densité de charge du polymère}}{\textit{Valeur de la conductivité de la solution à 9\% de concentration en matière active}}$$

Les exemples des polymères cationiques d'acrylamide connus dans l'art antérieur sont de différents types : il s'agit le plus fréquemment de co-polymères à base d'acrylamide et de monomères cationiques, ce peut être également des polymères dits de Mannich (le polymère d'acrylamide réagit avec du formaldehyde et une amine secondaire puis est quaternisé), des polymères glyoxalés ou des polymères d'acrylamide sur lesquels on a effectué une dégradation d'Hofmann.

Parmi tous ces polymères, seuls ceux obtenus par réaction de dégradation d'Hofmann présentent des propriétés spécifiques non partagées en terme de densité de charge cationique.

La dégradation d'Hofmann

Cette réaction découverte par Hofmann à la fin du dix neuvième siècle, permet de passer d'une fonction amide à une fonction amine primaire par élimination d'un atome de carbone. Le mécanisme réactionnel est détaillé ci-dessous.

En présence d'une base (e.g. : NaOH), un proton est arraché à l'amide.

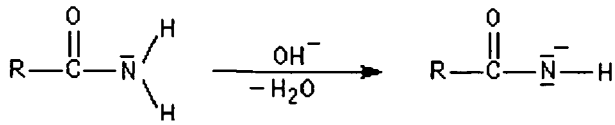


L'ion amidate formé réagit alors avec le chlore actif (C12) de l'hypochlorite (e.g. : NaClO qui est en équilibre : 2 NaOH + C12 NaOCl + NaCl + H2O) pour donner un N-chloramide. La base (NaOH) arrache un proton du chloramide pour former un anion. L'anion perd un ion chlorure pour former un nitrène qui subit une transposition en isocyanate.

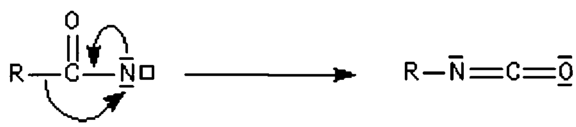

Par réaction entre l'ion hydroxyde et l'isocyanate, un carbamate est formé.

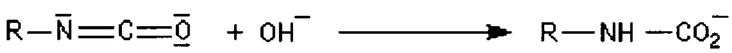

Après décarboxylation (élimination de $CO_2$ en présence d'acide, e.g. : HCl) à partir du carbamate, on obtient une amine primaire sous la forme d'un sel d'acide.

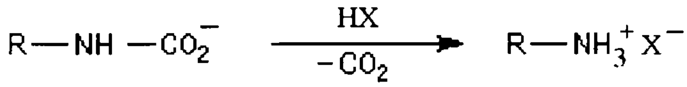


Il est important de noter que, de façon systématique, de par les réactifs requis une très grosse quantité de sel de sodium est également produite.

En pratique, il faut, pour chaque fonction amide dégradée, 4 molécules d'hydroxyde de sodium. Ce qui revient à dire que pour chaque fonction amine primaire obtenue ce sont donc 4 molécules de sel de sodium (e.g. : chlorure de sodium) qui sont produites.

Cela s'applique également pour la réaction de dégradation d'Hofmann sur un copolymère d'acrylamide qui est une réaction connue et exemplifiée depuis de nombreuses années, notamment dans la demande de brevet US 579222 daté de 1956.

Pour la conversion de tout ou partie des fonctions amide d'un (co)polymère d'acrylamide en fonction amine, 2 facteurs principaux interviennent (exprimés en rapports molaires). Il s'agit de : - Alpha = (hypohalogénure d'alcalin et/ou d'alcalino terreux / (meth)acrylamide) et - Beta = (hydroxide d'alcalin et/ou d'alcalino terreux / hypohalogénure d'alcalin et/ou d'alcalino terreux).

Les polymères obtenus par réaction de dégradation d'Hofmann sont notamment utilisés comme agents de résistance dans les procédés de fabrication de papiers. De manière générale, on sait que pour être efficace comme agent de résistance, les (co)polymères mis en oeuvre doivent être le plus cationiques possible et donc présenter un degré de dégradation élevé. De par leurs propriétés intrinsèques (stabilisation, cationisation, complexation...) les polymères de l'invention peuvent également avoir un intérêt dans des applications très diverses. On citera de façon non limitative : le traitement des eaux (potables ou usées), les techniques de coagulation/floculation, l'industrie minière, l'industrie des cosmétiques et de la détergence, l'industrie textile...

En effet, en fonction du degré Alpha de dégradation, il est possible de générer des variations de cationicité, liée à la quantité de fonctions amines produites sur le squelette carboné du (co)polymère.

De fait, pour dégrader par réaction d'Hofmann X moles% de fonctions acrylamide d'un homopolymère d'acrylamide en fonction amine primaire, le poids sec d'halogénure de sodium formé est égale à : « X » mutiplié par « le nombre de moles d'acrylamide » mutiplié par « 4 » et mutiplié par « masse molaire du sels», avec « le nombre de moles d'acrylamide » = (masse sèche en polymère / 71), 71 étant la masse molaire de l'acrylamide.

Ainsi, pour une masse d'homopolymère d'acrylamide égale à 100 grammes, une réaction de dégradation d'Hofmann produit les masses de sel suivantes :

| X (= Alpha) | NaCl (en grammes) (masse molaire = 58,5) |
|---|---|
| 0,5 soit 50% | 164,8 |
| 0,7 | 230 |
| 1 | 329,6 |

Cette très forte teneur en sel (e.g. : l'alpha 1 comporte 3 fois plus de sel que de matière active) dans la solution polymérique n'est pas neutre et peut dans certains cas être à l'origine de problèmes lorsque par exemple le polymère est utilisé en circuit fermé. Ce peut être le cas en particulier dans l'industrie papetière ou l'augmentation de la conductivité des « eaux de process » qui en résulte peut avoir des répercutions importantes sur le procédé de fabrication qui est très sensible au moindre changement de conditions opératoires. Une telle variation peut entraîner, par exemple, une désactivation du polymère de rétention et ainsi une chute en rétention de charges.

De plus, l'instabilité inhérente des polymères obtenus par réaction de dégradation d'Hofmann sur un (co)polymère d'acrylamide (ils perdent rapidement une forte proportion de leur cationicité), rendait le produit impraticable au point de vue industriel. L'homme du métier était, de fait, dissuadé d'utiliser ces produits dans les procédés de fabrication de papier notamment.

Jusqu'à récemment, seuls des procédés très lourds mettant en oeuvre, in situ, une unité de fabrication de produit de dégradation d'Hofmann (EP 377313) ou des procédés mettant en oeuvre un autre polymère (base de type (co)polymère de N-vinylformamide suivie d'une hydrolyse) lui-même relativement coûteux (US 2004/118540), avaient été mis en place.

Il a fallu attendre début 2005 et le brevet WO2006075115 de la demanderesse pour qu'enfin une solution industrielle viable soit proposée. L'invention y est caractérisée, en partie, par le fait que le produit de dégradation d'Hofmann revendiqué est un polymère organique produit à une concentration supérieure à 3,5% en poids et de préférence supérieure à 4,5%. Même si les performances de résistance à sec sont fortement améliorées, les polymères

produits restent instables dans le temps.

Le Demandeur a remarqué que de manière toute à fait surprenante, une optimisation du coefficient de désalination (Cd) permet de conférer aux copolymères de l'invention une stabilité satisfaisante.

Plus précisément, le Demandeur a constaté qu'un copolymère cationique d'acrylamide obtenu par réaction de dégradation dite d'Hofmann présentant une concentration élevée (supérieure à 8% en poids), une cationicité forte, ainsi qu'une teneur en sel d'alcalin réduite (caractérisée par son coefficient de desalinisation) permettait d'améliorer sa stabilité et ses performances applicatives, notamment en terme de résistance à sec, de coagulation ainsi que la capacité à faire diminuer la demande chimique en oxygène (DCO).

Pour rappel, la demande chimique en oxygène (DCO) est une mesure permettant d'apprécier la concentration en matières organiques ou minérales, dissoutes ou en suspension dans l'eau, au travers de la quantité d'oxygène nécessaire à leur oxydation chimique totale.

**Description de l'invention**

La demanderesse a trouvé et mis au point des copolymères cationiques d'acrylamide obtenus par réaction de dégradation dite d'Hofmann, à l'aide d'un hydroxyde d'alcalin et/ou alcalino-terreux et d'un hypohalogénure d'alcalin et/ou alcalino-terreux, et l'utilisation de ces polymères principalement comme agents de résistance pour le papier et/ou agents de coagulation, caractérisés en ce que' ils sont obtenus en solution aqueuse et en ce que ladite solution aqueuse comporte une teneur en sel réduite caractérisée par un coefficient de désalination (Cd) supérieur à 0,6, de préférence supérieur à 0,65, avantageusement supérieur à 0,7, avec Cd égal à :

$$\frac{\textit{Matière active réelle polymérique (en poids \%) x Densité de charge du polymère}}{\textit{Valeur de la conductivité de la solution à 9\% de concentration en matière active}}$$

Cette sélection d'un produit de dégradation d'Hofmann obtenu en solution aqueuse sur un copolymère base comprenant :

- au moins un monomère non ionique choisi dans le groupe comprenant l'acrylamide (et/ou le méthacrylamide), le N,N diméthylacrylamide et/ou l'acrylonitrile,
- et au moins un co-monomère éthylénique cationique non saturé et/ou un co-monomère non ionique qui ne soit pas l'acrylamide (et/ou le méthacrylamide), le N,N diméthylacrylamide et/ou l'acrylonitrile,

  permet d'atteindre de façon surprenante un niveau de performances inégalé jusqu'alors par ces mêmes (co)polymères en particulier dans l'application papetière et tout particulièrement pour la résistance à sec.

Selon une autre caractéristique, le coefficient Alpha (correspondant au pourcentage de fonctions acrylamide dégradées en fonctions amines) c'est-à-dire le rapport hypohalogénure d'alcalin et/ou alcalino-terreux/ monomère non ionique choisi dans le groupe comprenant l'acrylamide (et/ou le méthacrylamide), le N,N diméthylacrylamide et/ou l'acrylonitrile utilisé pour la préparation des polymères de l'invention est supérieur à 0,5, voire à 0,7 (e.g. > 70%), de préférence supérieur à 0,9 et avantageusement égal à 1. Dans le cas où les réactifs mis en oeuvre sont le chlorure et l'hypochlorite de sodium, il est important de noter que sur le produit fini, Alpha peut être estimé de façon relativement précise par un simple dosage du chlorure de sodium sachant que le sodium de l'hypochlorite (masse molaire : 74,5 g/mol) représente ¼ du sodium total.

Alors même que ces produits sont connus dans l'art antérieur pour leur instabilité et/ou leur faible concentration, on ne pouvait donc pas présumer qu'une action conjointe sur la nature du polymère de base (ici un copolymère) et sur la proportion limitée en sel par rapport aux copolymères cationiques d'acrylamide présents dans la solution non seulement n'affecterait pas les performances des polymères obtenus selon l'invention mais, de plus, permettrait d'atteindre des résultats supérieurs aux mêmes polymères de l'art antérieur ne présentant pas ces spécificités.

Le copolymère obtenu selon l'invention peut être utilisé avec succès pour la fabrication de papiers et cartons d'emballage, de papiers supports de couchage, de tout type de papiers, cartons ou analogues nécessitant l'utilisation d'un polymère cationique et comme agent de coagulation.

Les copolymères cationiques d'acrylamide de l'invention permettent, en particulier, d'obtenir une résistance à l'éclatement et à la traction très élevée et ceci, sans effet secondaire négatif.

Selon une autre caractéristique, le produit de dégradation d'Hofmann est produit à une concentration supérieure à 8% en poids, de préférence supérieure à 10% en poids, avantageusement supérieure à 12% en poids.

De même, le copolymère de l'invention a une densité de charge cationique supérieure à 3 meq/g, avantageusement supérieure à 5 meq/g.

**Le (co)polymère cationique d'acrylamide**

Il est obtenu par réaction de dégradation d'Hofmann sur un copolymère base.

Le copolymère « base »

En pratique, le polymère base utilisé est constitué :

- d'au moins un monomère non ionique choisi dans le groupe comprenant l'acrylamide (et/ou le méthacrylamide), le N,N diméthylacrylamide et/ou l'acrylonitrile, préférentiellement l'acrylamide, avantageusement au moins 5 moles% dudit monomère, de préférence au moins 50% moles% dudit monomère, en pratique de l'ordre 70% moles% dudit monomère,
- et d'au moins :

    - un monomère éthylénique cationique non saturé, choisi préférentiellement dans le groupe comprenant les monomères de type dialkylaminoalkyl (meth)acrylamide, diallylamine, methyldiallylamine et leurs sel d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
    - et/ou un monomère non ionique choisi préférentiellement dans le groupe comprenant le N-vinyl acetamide, N-vinyl formamide, la N-vinylpyrrolidone et/ou le vinyl acétate.

Optionnellement, le polymère base peut également être très faiblement amphotère (taux inférieur à 5 moles%) et comporter par exemple des charges anioniques portées par des monomères de type acide ou anhydride tels que, par exemple, l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sel.

Dans un mode de réalisation avantageux, le polymère de base contient 70% moles% d'acrylamide et 30% de DADMAC.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide... les dérivés d'acide acrylique comme les alkyl acrylates et méthacrylates...

De manière connue, le copolymère base peut également être ramifié. Comme on le sait, un polymère ramifié est un polymère qui présente sur la chaîne principale des branches, des groupements ou des ramifications, disposés globalement dans un plan.

On pourra effectuer la ramification de préférence durant (ou éventuellement après) la polymérisation, en présence d'un agent ramifiant et éventuellement d'un agent de transfert. On trouvera ci dessous une liste non limitative des ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la réticulation.

En pratique, l'agent de ramification est le méthylène bis acrylamide (MBA) introduit avantageusement à raison de cinq à cinquante milles (5 à 50000) parties par million en poids, de préférence 5 à 1000. Avantageusement, l'agent de ramification est le méthylène bis acrylamide (MBA). l'anhydride maléique, l'acide maléique, l'acide méthallyl sulfonique, l'acide vinyl-sulfonique et leurs sel.

Dans un mode de réalisation avantageux, le polymère de base contient 70% moles% d'acrylamide et 30% de DADMAC.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide... les dérivés d'acide acrylique comme les alkyl acrylates et méthacrylates...

De manière connue, le copolymère base peut également être ramifié. Comme on le sait, un polymère ramifié

est un polymère qui présente sur la chaîne principale des branches, des groupements ou des ramifications, disposés globalement dans un plan.

On pourra effectuer la ramification de préférence durant (ou éventuellement après) la polymérisation, en présence d'un agent ramifiant et éventuellement d'un agent de transfert. On trouvera ci dessous une liste non limitative des ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la réticulation.

En pratique, l'agent de ramification est le méthylène bis acrylamide (MBA) introduit avantageusement à raison de cinq à cinquante milles (5 à 50000) parties par million en poids, de préférence 5 à 1000. Avantageusement, l'agent de ramification est le méthylène bis acrylamide (MBA).

La réaction de dégradation d'Hofmann sur le polymère base

La réaction d'Hofmann nécessite la conversion des fonctions amide en fonction amine en faisant intervenir 2 facteurs principaux (exprimés en rapports molaires) :

- Alpha = (hypohalogénure d'alcalin et/ou alcalino-terreux / (meth)acrylamide)
- Beta = (hydroxyde d'alcalin et/ou alcalino-terreux / hypohalogénure d'alcalin et/ou alcalino-terreux)

A partir d'une solution de copolymère base (copolymère d'acrylamide et dérivés) de concentration comprise entre 10 et 40% en poids, de préférence entre 20 et 40%, on détermine la quantité molaire de fonction (meth)acrylamide totale. On choisit alors le niveau de dégradation alpha souhaité (qui correspond au degré de fonction amine voulu), qui permet de déterminer la quantité sèche d'hypohalogénure d'alcalin et/ou d'alcalino-terreux et ensuite le coefficient béta, qui permet de déterminer la quantité sèche d'hydroxyde d'alcalin et/ou alcalino-terreux.

On prépare alors une solution d'hypohalogénure d'alcalin et/ou alcalino-terreux et d'hydroxyde d'alcalin et/ou alcalino-terreux à partir des rapports alpha et béta. Classiquement, les réactifs utilisés sont l'hypochlorite de sodium et la soude (hydroxyde de sodium).

Afin de stabiliser les fonctions amines qui vont être produites, on peut éventuellement rajouter, dans le réacteur contenant le polymère base, un (ou éventuellement plusieurs) dérivé d'ammonium quaternaire tel que cela est décrit dans le brevet JP 57077398 et bien connu par l'homme de métier, celui-ci a en effet pour but d'éviter la réaction entre les fonctions amines et les fonctions amides résiduelles. On notera, de plus, que l'ajout de ces agents peut être effectué en séparé, en simultané, en mélange ou non, dans un ordre quelconque d'introduction et en un ou plusieurs points d'injection.

Augmentation du coefficient de désalination (Cd)

Cette opération consiste à enlever une partie du solvant (ici l'eau) de manière à enrichir la solution en corps dissous et à poursuivre cette concentration jusqu'à saturer la solution en sel. C'est seulement à ce stade qu'une poursuite de la concentration aura pour effet de réduire la proportion de sel présente dans la solution.

La présente invention est caractérisée par le fait que la solution aqueuse comprenant les copolymères cationiques d'acrylamide obtenus par réaction de dégradation dite d'Hofmann présente un coefficient de désalination (Cd) supérieur à 0,6, de préférence supérieur à 0,65, avantageusement supérieur à 0,7, avec Cd égal à :

$$\frac{\textit{Matière active réelle polymérique (en poids \%) x Densité de charge du polymère}}{\textit{Valeur de la conductivité de la solution à 9\% de concentration en matière active}}$$

On notera que ce coefficient lie tout à la fois la matière active, le degré de dégradation et la salinité de la solution (exprimée en conductivité).

L'homme de métier saura choisir en fonction de ses connaissances propres et de la présente description, la technique séparative la mieux appropriée qui lui permettra de satisfaire à ces obligations. Parmi les techniques conventionnelles, on citera la distillation, l'évaporation ainsi que les techniques utilisant des membranes telles que, par exemple, l'électrodialyse, l'osmose inverse ou l'utrafiltration.

De plus, bien que préparés en solution, les polymères de l'invention peuvent également être proposés sous forme solide. Dans ces conditions, la forme solide contient non seulement le copolymère, mais également une proportion de sel obtenue à l'issue de la réaction de dégradation d'hofmann. En pratique, ils sont obtenus entre autres par des

procédés consistant à sécher la matière active de la solution précédemment citée. Les principales techniques d'isolation alors utilisées sont celles du séchage par atomisation ou pulvérisation (qui consiste à créer un nuage de fines gouttelettes dans un courant gazeux chaud pendant une durée contrôlée), du séchage à tambour, des sécheurs à lit fluidisé...

Comme déjà dit, les copolymères de l'invention trouvent une application plus spécifique dans les procédés de fabrication de papier pour leur propriété de résistance à sec, de coagulation ainsi que leur capacité à faire diminuer la demande chimique en oxygène (DCO).

Dès lors, l'invention a également pour objet un procédé de fabrication d'une feuille de papier et/ou de carton et analogues, selon lequel, avant formation de ladite feuille, on ajoute à la suspension fibreuse, séparément ou en mélange, dans un ordre quelconque d'introduction, en un ou plusieurs points d'injection, au moins deux agents de résistance à sec respectivement :

- un premier agent correspondant au co-polymère de la présente invention,
- et un second agent correspondant à un (co)polymère ayant une densité de charge anionique supérieure à 0,1 meq/g.

Selon le procédé, les premier et second agents sont introduits dans la suspension fibreuse à raison de 0,01 à 2% chacun en poids de matière active polymère par rapport au poids sec de la suspension fibreuse.

En pratique, la résine anionique est un polymère organique hydrosoluble ayant une densité de charge anionique supérieure à 0,1 meq/g, caractérisé en ce qu'il est obtenu à partir de :

- 1 à 100% molaire d'au moins un monomère possédant une charge anionique,
- et 0 à 99% molaire d'au moins un monomère possédant une charge neutre et/ou cationique.

On trouvera ci-dessous une liste non limitative des monomères pouvant être utilisés :

a/ les monomères anioniques possédant une fonction carboxylique (ex : acide acrylique, acide methacrylique, et leurs sels...), possédant une fonction acide sulfonique (ex : acide 2-acrylamido-2-méthylpropane sulfonique (AMPS), acide vinyl sulfonique, acide méthallyl sulfonique et leurs sels...)

b/ les monomères non ioniques : acrylamide, methacrylamide, N,N diméthylacrylamide, N-vinyl pyrrolidone, N-vinyl acétamide, N-vinyl formamide, vinylacetate, esters acrylate, alcool allylique...et/ou les monomères cationiques : on citera, en particulier et de façon non limitative, l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).

La résine anionique ne nécessite pas le développement de procédé de polymérisation particulier. Elle peut être obtenue par toutes les techniques de polymérisation bien connues de l'homme de métier : polymérisation en gel, polymérisation par précipitation, polymérisation en émulsion (aqueuse ou inverse) suivie ou non d'une étape de distillation et/ou de spray drying, polymérisation en suspension, polymérisation en solution...

Selon un mode de réalisation particulier et préféré, le (co)polymère ayant une densité de charge anionique supérieure à 0,1 meq/g est ramifié. Il est obtenu par l'ajout, avant, pendant et/ou après la polymérisation, d'un agent ramifiant en présence ou non d'un agent de transfert. Lorsque l'agent ramifiant est du glyoxal, il est ajouté après la polymérisation.

On trouvera ci dessous une liste non limitative des agents ramifiants : méthylène bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la ramification.

On trouvera ci dessous une liste non limitative des agents de transfert : alcool isopropylique, hypophosphite de sodium, mercaptoethanol, etc...

En pratique, le second agent de résistance à sec est introduit, de manière tout à fait préférée, dans la suspension à raison de 100 g/t à 20000 g/t en poids de matière active (polymère) par rapport au poids sec de la suspension fibreuse, de préférence de 500 g/t à 5000 g/t.

Les exemples suivants illustrent l'invention sans toutefois en limiter la portée.

## EXEMPLES

### <u>Les (co)polymères cationiques d'acrylamide</u>

Le produit a été obtenu par une réaction dégradation d'Hofmann d'un homopolymère d'acrylamide ou d'un

copolymère d'acrylamide et de chlorure de dimethyldiallyl ammonium (Dadmac) ou de N-vinylpyrrolidone (NVP) à la température de 10°C à l'aide d'hypochlorite de sodium, d'hydroxyde de sodium et d'acide chlorhydrique (utilisés comme réactifs selon le procédé précédemment décrit) (éventuellement, cf A2, en présence d'amidon natif: 4,5% en poids) suivie d'une distillation. Les polymères bases ont été polymérisés en solution aqueuse à 25% de concentration présentant tous une même viscosité (3000 cps). On notera qu'il existe une corrélation directe entre la viscosité de la solution de la base et le poids moléculaire du polymère.

Dans les exemples qui suivent, les polymères suivants ont été réalisés :

| (co)polymère cationique d'acrylamide | Composition | Matière active réelle polymérique (en poids%) | Densité de charge (meq/g de polymère) | Conductivité de la solution à 9% de concentration en matière active (mS/cm) | Coefficient de désalinisation (Cd) |
|---|---|---|---|---|---|
| Ce1 | AM | 7,5 | 7 | 204 | 0,25 |
| Ce2 | AM | 4,8 | 9,3 | 208 | 0,22 |
| C3 | AM/DADMAC | 15 | 9,2 | 109 | 1,27 |
| C4 | AM/DADMAC + amidon | 25 | 5,8 | 72 | 2,01 |
| C5 | AM/NVP | 15 | 6,8 | 101 | 1,01 |
| AM = homopolymère d'acrylamide<br>AM/Dadmac = copolymère acrylamide / Dadmac (70/30 mol%)<br>AM/NVP = copolymère acrylamide / N-vinylpyrrolidone (70/30 mol%)<br>Ce : contre-exemples | | | | | |

Rmq : afin de mesurer les valeurs de conductivité des solutions à la concentration de 9% en poids de matière active, les solutions ont été soit diluées, soit concentrées par distillation.

**Méthodes d'analyse**

a/ Mesure de la matière active réelle :

Dans le cadre des exemples de l'invention, cette mesure n'est pas nécessaire car les concentrations en polymère peuvent être estimées directement en fonction des conditions opératoires. Malgré tout, la valeur peut également être mesurée à l'aide d'un procédé de purification permettant d'isoler la matière polymérique du sel.

Classiquement, pour obtenir une forme purifiée du polymère en solution, on utilisera soit les techniques dites de précipitation par solvant, bien connue par l'homme de métier, ou de purification par dialyse. Ce dernier principe consiste à séparer deux solutions (ici polymérique et saline) par une membrane semi-perméable poreuse (pores de diamètres, de l'ordre du micromètre [µm], identiques et connus), se présentant le plus souvent sous la forme d'un boudin de dialyse. Par effet d'osmose et d'agitation moléculaire les petites molécules (NaCl) traverseront la membrane, tandis que les grosses molécules (polymère) seront retenues dans le boudin de dialyse. Suivie d'un extrait sec, la dialyse permet alors de déterminer précisément la concentration en polymère cationique dans la solution.

b/ Mesure de la densité de charge du polymère :

Une solution à 5 g/l de (co)polymère cationique d'acrylamide obtenue selon l'invention est dosée avec un polymère anionique (Polyvinyl sulfate de potassium=PVSK) en présence d'un indicateur coloré (Bleu de toluidine).

Méthode de mesure :

En premier lieu, préparer une solution à 5 g/l de polymère. A partir de la matière active théorique du liquide, faire la dilution de façon à obtenir un volume final de 200 ml. Homogénéiser avec l'agitateur magnétique.

Quand la solution mère est homogène, peser 1 g de celle-ci dans un bécher de 200 ml et compléter par 100 ml d'eau déionisée. Agiter pour rendre la solution homogène. Ajouter quelques gouttes d'acide chlorhydrique sous agitation, de façon à obtenir un pH inférieur à 4. Ajouter alors 2 ou 3 gouttes d'indicateur coloré et doser la solution avec

le PVSK N/400 (provenant de chez Wako de facteur connu f).

La coloration passe du bleu au violet. le point final est considéré comme atteint lorsque la coloration violette persiste quelques secondes.

Le volume obtenu en ml est noté V.

La charge cationique en meq/g est obtenue de la façon suivante :

$$E = \frac{V \times 10^{-3}}{5 \times 10^{-3}} \text{ x } \frac{1}{400} \text{ x f (eq/g)}$$

$$E = \frac{V}{2} \text{ x f (meq/g)}$$

c/ Mesure de la conductimétrie :

Une solution ionique est conductrice : c'est la présence d'ions qui assure le caractère conducteur de la solution. La conductivité est caractéristique de la solution. Elle dépend de la concentration et de la nature des ions qui la composent ainsi que de la température. Les valeurs de conductivité de l'invention ont été mesurées par un conductimètre de type Orion (modèle 120) à la température de 20°C et sont exprimées en milli-siemens par cm (mS/cm).

Il est important de noter que pour chacun des polymères exemplifiés (à l'exception du polymère Ce1 : Alpha = 0,7), les conditions opératoires en terme d'hypochlorite de sodium, d'hydroxyde de sodium et d'acide chlorhydrique sont adaptées et optimisées pour que toutes les fonctions amides portées par le polymère soient dégradées par réaction d'Hofmann en fonctions amines.

De par leur spécificité liée à leur densité de charge cationique élevée, les polymères de l'invention ont un intérêt tout particulier lors de leur utilisation comme agents de résistance pour le papier. C'est pourquoi il a été décidé de tester leurs propriétés en terme d'efficacité dans ce cadre applicatif.

**Procédure de test des propriétés des polymères**

**A/ Test de stabilité par vieillissement artificiel accéléré :**

L'instabilité des copolymères cationiques ou amphotères d'acrylamide obtenus par réaction de dégradation dite d'Hofmann est le plus souvent caractérisée par une gélification progressive de la solution ou du moins un fort épaississement de celle-ci au cours de son vieillissement.

Un test de stabilité efficace consiste à mesurer les variations de viscosité intervenant sur un échantillon de produit placé 7 jours à 50°c, la température élevée ayant pour effet d'accélérer le vieillissement et donc de diminuer la durée du test qui a température ambiante prendrait plusieurs semaines.

Lors de ce test, les viscosités sont mesurées avant et après vieillissement. Lorsque l'écart est supérieur à 30%, le polymère testé est considéré comme non stable.

| (co)polymère cationique d'acrylamide | Composition | Ecart de viscosité bulk (en %) | Conclusion |
|---|---|---|---|
| Ce1 | AM | 330 | Instable |
| Ce2 | AM | 45 | Instable |
| C3 | AM/DADMAC | 19 | Stable |
| C4 | AM/DADMAC + amidon | 10 | Stable |
| C5 | AM/NVP | 22 | Stable |

**B/ Test applicatif** :

Les formettes de papier sont réalisées avec une formette dynamique automatique. Tout d'abord, la pâte à papier est préparée en désintégrant pendant 30 minutes 90 grammes de fibres kraft vierges dans 2 litres d'eau chaude. La pâte obtenue est ensuite diluée jusqu'à un volume total de 9 litres. Une fois la consistance mesurée précisément, la quantité nécessaire de cette pâte est prélevée de manière à obtenir au final une feuille avec un grammage de 60g/m$^2$.

La pâte est alors introduite dans le cuvier de la formette dynamique, diluée jusqu'à une consistance de 0,32% et agitée modérément avec un agitateur mécanique afin d'homogénéiser la suspension fibreuse.

En mode manuel, la pâte est pompée jusqu'au niveau de la buse afin d'amorcer le circuit.

Un buvard et la toile de formation sont placés dans le bol de la formette dynamique avant de démarrer la rotation du bol à 900m/min et de construire le mur d'eau. Les différents agents de résistance à sec sont alors introduits dans la suspension fibreuse agitée avec un temps de contact de 30 secondes pour chaque polymère. La feuille est alors réalisée (en mode automatique) par 22 aller-retour de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 107°C. Les deux buvards sont ensuite retirés et la feuille est stockée pendant une nuit dans une pièce à humidité et température contrôlées (50% d'humidité relative et 23 °C). Les propriétés de résistance à sec et humide de toutes les feuilles obtenues par cette procédure sont alors évaluées.

L'éclatement est mesuré avec un éclatomètre Messmer Buchel M 405 (moyenne sur 14 mesures).

La traction à sec et/ou l'énergie de traction absorbée (TEA) sont mesurées dans le sens machine avec un appareil de traction Testometric AX (moyenne sur 5 échantillons).

La traction humide est mesurée dans le sens machine avec un appareil de traction Testometric AX après que l'échantillon ait été trempé pendant 20 secondes dans une cellule de Finch remplie d'eau déionisée (moyenne sur 5 échantillons).

Dans tous les exemples qui suivent, et sauf indication contraire, les feuilles de papier sont réalisées selon la procédure ci-dessus en introduisant en premier l'agent de résistance à sec cationique (le produit de dégradation d'Hofmann) à un dosage de 2 kg/T (polymère sec / fibre sèche) puis la résine anionique à un dosage de 2 kg/T (polymère sec / fibre sèche).

Les tests sont réalisés avec une pâte à pH neutre.

**La résine anionique**

La résine anionique utilisée lors des tests est un copolymère acrylamide et acide acrylique obtenues par polymérisation en solution à 15% telle que définie ci-après.

| résine anionique | Composition | Rapport molaire | Anionicité (meq/g) | Structure | Viscosité de la solution de polymère (cps) |
|---|---|---|---|---|---|
| A | AM/AA | 70/30 | 3,85 | Ramifié (MBA) | 2500 |

**<u>Performances en application DSR (résistance à sec), grammage à 60g/m²</u>**

**Tableau 1** : test comparatif avec des polymères de l'art antérieur

| Polymère cationique C | Dosage C % | Dosage A % | Traction sec (km) | BI | TEA (J/m2) | % aug Traction | % aug BI | % aug TEA |
|---|---|---|---|---|---|---|---|---|
| Blanc | 0 | 0 | 3,070 | 1,446 | 36,191 | - | - | - |
| Ce1 | 0,2 | 0 | 3,080 | 1,490 | 36,201 | 0,3% | 3,0% | 0,0% |
| Ce1 | 0,2 | 0,2 | 3,837 | 1,910 | 44,382 | 25,0% | 32,1% | 22,6% |
| Ce2 | 0,2 | 0 | 3,085 | 1,501 | 36,403 | 0,5% | 3,8% | 0,6% |
| Ce2 | 0,2 | 0,2 | 4,010 | 1,982 | 45,675 | 30,6% | 37,1% | 26,2% |
| C3 | 0,2 | 0 | 3,115 | 1,612 | 36,318 | 1,5% | 11,5% | 0,4% |
| C3 | 0,2 | 0,2 | 4,458 | 2,115 | 53,227 | 45,2% | 46,3% | 47,1% |
| C4 | 0,2 | 0 | 3,572 | 1,785 | 43,497 | 16,4% | 23,4% | 20,2% |
| C4 | 0,2 | 0,2 | 4,397 | 2,130 | 58,448 | 43,2% | 47,3% | 61,5% |

(suite)

| Polymère cationique C | Dosage C % | Dosage A % | Traction sec (km) | BI | TEA (J/m2) | % aug Traction | % aug BI | % aug TEA |
|---|---|---|---|---|---|---|---|---|
| C5 | 0,2 | 0 | 3,227 | 1,753 | 43,210 | 5,1% | 21,2% | 19,4% |
| C5 | 0,2 | 0,2 | 4,430 | 2,150 | 58,550 | 44,3% | 48,7% | 61,8% |
| % aug : pourcentage d'augmentation exprimés par rapport au blanc | | | | | | | | |

Ces résultats montrent clairement que, à poids moléculaire identique et à densité de charge cationique et comparable (C3 par rapport à Ce2, C5 par rapport à Cel), les propriétés de résistance à sec augmentent lorsqu'on utilise les copolymères de l'invention.

On constate de plus qu'un polymère cationique d'acrylamide obtenu selon l'invention par réaction de dégradation d'Hofmann en présence d'un polyol (amidon, C4) présente les meilleures performances.

Remarque : dans le tableau 1 les essais ont été effectués dans les 2 jours qui ont suivis la préparation du polymère cationique d'acrylamide.

**Tableau 2** : effet du vieillissement sur les performances de la solution aqueuse de polymères cationiques d'acrylamide obtenus par réaction de dégradation d'Hofmann

| Les mêmes essais que ceux présentés dans le tableau 1 ont été réalisés mais cette fois-ci en utilisant la solution polymérique 1 mois après sa préparation. | | | | | | | | |
|---|---|---|---|---|---|---|---|---|
| **Polymère cationique C** | **Dosage C %** | **Dosage A %** | **Traction sec (km)** | **BI** | **TEA (J/m2)** | **% var Traction** | **% var BI** | **% var TEA** |
| *Blanc* | *0* | *0* | **3,070** | **1,446** | **36,191** | - | - | - |
| *Ce1* | *0,2* | *0,2* | 3,526 | 1,678 | 41,253 | -8,11% | -12,15% | -7,05% |
| *Ce2* | *0,2* | *0,2* | 3,650 | 1,750 | 42,360 | -8,98% | -11,71% | -7,26% |
| *C3* | *0,2* | *0,2* | 4,525 | 2,120 | 53,335 | 1,50% | 0,24% | 0,20% |
| *C4* | *0,2* | *0,2* | 4,421 | 2,125 | 58,563 | 0,55% | -0,23% | 0,20% |
| *C5* | *0,2* | *0,2* | 4,435 | 2,170 | 58,600 | 0,11% | 0,93% | 0,09% |
| % var : pourcentage de variation exprimés par rapport aux valeurs du tableau 1 | | | | | | | | |

Le tableau ci-dessus montre que l'effet du vieillissement de la solution de polymère est très marqué pour les contre exemples (Ce) alors même que les performances des solutions aqueuses de polymères cationiques d'acrylamide obtenus par réaction de dégradation d'Hofmann selon l'invention ne sont pas affectées.

## Revendications

**1.** Solution aqueuse comprenant un copolymère cationique obtenu par réaction de dégradation dite d'Hofmann en solution aqueuse en présence d'un hydroxyde d'alcalin et/ou alcalino-terreux et d'un hypohalogénure d'alcalin et/ou alcalino-terreux, sur un copolymère base comprenant :

- au moins 5 moles % d'un monomère non ionique choisi dans le groupe comprenant l'acrylamide (et/ou le méthacrylamide), le N,N diméthylacrylamide et/ou l'acrylonitrile,
- et au moins un co-monomère éthylénique cationique non saturé et/ou un co-monomère non ionique qui ne soit pas l'acrylamide (et/ou le méthacrylamide), le N,N diméthylacrylamide et/ou l'acrylonitrile ,
- **caractérisée en ce qu'** elle présente un coefficient de désalination (Cd) supérieur à 0,6, de préférence supérieur à 0,65, avantageusement supérieur à 0,7, avec Cd égal à :

$$\frac{\textit{Matière active réelle polymérique (en poids \%) x Densité de charge du polymère}}{\textit{Valeur de la conductivité de la solution à 9\% de concentration en matière active}}$$

**2.** Solution aqueuse selon la revendication 1, **caractérisée en ce que** le rapport hypohalogénure d'alcalin et/ou alcalino-terreux / monomère non ionique (coefficient alpha) est supérieur à 0,5, de préférence supérieur à 0,9 et avantageusement égal à 1.

**3.** Solution aqueuse selon l'une des revendications précédentes, **caractérisée en ce qu'** elle est produite à une concentration supérieure à 8% en poids, de préférence supérieure à 10% en poids, avantageusement supérieure à 12% en poids.

**4.** Solution aqueuse selon l'une des revendications précédentes **caractérisée en ce que** le copolymère sur lequel est effectuée la réaction d'Hofmann a un poids moléculaire supérieur à 5 000 g/mol.

**5.** Solution aqueuse selon l'une des revendications précédentes caractérisée en ce que le co-monomère éthylénique cationique non saturé est choisi dans le groupe comprenant les monomères de type dialkylaminoalkyl (meth)acrylamide, diallylamine, methyldiallylamine et leurs sel d'ammonium quaternaire ou d'acides, en particulier le chlorure de dimethyldiallylammonium (DADMAC), le chlorure d'acrylamidopropyltrimethylammonium (APTAC), le chlorure de methacrylamidopropyltrimethylammonium (MAPTAC), et en ce que le co-monomère non ionique est choisi dans le groupe comprenant le N-vinyl acetamide, N-vinyl formamide, la N-vinylpyrrolidone et/ou le vinyl acétate.

**6.** Solution aqueuse selon l'une des revendications précédentes caractérisée en ce que le copolymère base sur lequel est effectuée la réaction d'Hofmann contient des monomères comportant des charges anioniques à un taux inférieur à 5 moles% et comporte des monomères de type acide ou anhydride choisis dans le groupe comprenant l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sel.

**7.** Solution aqueuse selon l'une des revendications précédentes caractérisée en ce que le copolymère base sur lequel est effectuée la réaction d'Hofmann est ramifié en présence d'un agent ramifiant, éventuellement d'un agent de transfert, et en ce que le ramifiant est choisi dans le groupe comprenant le methylene bisacrylamide, l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, et/ou des époxy.

**8.** Solution aqueuse selon l'une des revendications précédentes caractérisée en ce que le polymère a une densité de charge cationique supérieure à 3 meq/g, de préférence supérieure à 5 meq/g.

**9.** Solution aqueuse selon l'une des revendications précédentes caractérisée en ce que la solution aqueuse comprenant le polymère base contient en outre un additif choisi dans le groupe des molécules portant des fonctions hydroxyle et/ou amine tels que les alcools, les polyols, les polyosides, les polyamines et/ou les polyéthylène imine.

**10.** Solution aqueuse selon la revendication 9 **caractérisée en ce que** le polyol est de l'amidon.

**11.** Procédé de fabrication d'une feuille de papier et/ou de carton et analogues, selon lequel, avant formation de ladite feuille, on ajoute à la suspension fibreuse, séparément ou en mélange, dans un ordre quelconque d'introduction, en un ou plusieurs points d'injection, au moins deux agents de résistance à sec respectivement :

- un premier agent correspondant à une solution aqueuse objet de l'une des revendications 1 à 10,
- et un second agent correspondant à un (co)polymère ayant une densité de charge anionique supérieure à 0,1 meq/g.

**12.** Procédé selon la revendication 11, **caractérisé en ce que** le second agent est obtenu à partir de :

- 1 à 100% molaire d'au moins un monomère possédant une charge anionique,
- et 0 à 99% molaire d'au moins un monomère possédant une charge neutre ou cationique.

**13.** Procédé selon la revendication 12, **caractérisé en ce que** les monomères possédant une charge anionique sont des monomères possédant une fonction carboxylique choisis dans le groupe comprenant acide acrylique, acide methacrylique, et leurs sels... et/ou, possédant une fonction acide sulfonique choisis dans le groupe comprenant l'acide 2-acrylamido-2-méthylpropane sulfonique (AMPS), acide vinyl sulfonique, acide méthallyl sulfonique et leurs sels... et/ou des monomères non ioniques choisis dans le groupe comprenant: acrylamide, methacrylamide, N,N diméthylacrylamide N-vinyl pyrrolidone, N-vinyl acétamide, N-vinyl formamide, vinylacetate, esters acrylate, alcool allylique... et/ou des monomères cationiques choisis dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).

**14.** Utilisation d'une solution aqueuse selon l'une quelconque des revendications 1 à 10 comme agent de résistance pour le papier ou agent de coagulation.

**Patentansprüche**

**1.** Wässrige Lösung, die ein kationisches Copolymer enthält, das durch eine sogenannte Hofmann-Abbaureaktion in wässriger Lösung im Beisein eines Alkali- und/oder Erdalkali-Hydroxids und eines Alkali- und/oder Erdalkali-Hypohalogenids an einem Basiscopolymer gewonnen wird, Folgendes umfassend:

- mindestens 5 Mol-% eines nicht ionischen Monomers, das aus der Gruppe ausgewählt ist, die Acrylamid (und/oder Methacrylamid), N,N-Dimethylacrylamid und/oder Acrylnitril umfasst,
- und mindestens ein nicht gesättigtes, kationisches Ethylen-Comonomer und/oder ein nicht ionisches Comonomer, bei dem es sich nicht um Acrylamid (und/oder Methacrylamid), N,N-Dimethylacrylamid und/oder Acrylnitril handelt,
- **dadurch gekennzeichnet, dass** sie einen Entsalzungskoeffizienten (Cd) von über 0,6, vorzugsweise über 0,65, vorteilhafter Weise über 0,7 aufweist, wobei der Cd gleich:

$$\frac{\textit{tatsächlich aktives Polymermaterial (in Gew.-\%) x Ladungsdichte des Polymers}}{\textit{Wert der Leitfähigkeit der Lösung bei 9\% Konzentration an aktivem Material}}$$

ist.

**2.** Wässrige Lösung nach Anspruch 1, **dadurch gekennzeichnet, dass** das Verhältnis von Alkali- und/oder Erdalkali-Hypohalogenid zu nicht ionischem Monomer (Alphakoeffizient) über 0,5, vorzugsweise über 0,9 und vorteilhafter Weise gleich 1 ist.

**3.** Wässrige Lösung nach einem der vorhergehenden Ansprüche, **dadurch gekennzeichnet, dass** sie in einer Konzentration von über 8 Gew.-%, vorzugsweise über 10 Gew.-%, vorteilhafter Weise über 12 Gew.-% hergestellt ist.

**4.** Wässrige Lösung nach einem der vorhergehenden Ansprüche, **dadurch gekennzeichnet, dass** das Copolymer, an dem die Hofmann-Reaktion durchgeführt wird, ein Molekulargewicht von über 5000 g/Mol hat.

**5.** Wässrige Lösung nach einem der vorhergehenden Ansprüche, **dadurch gekennzeichnet, dass** das nicht gesättigte, kationische Ethylen-Comonomer aus der Gruppe ausgewählt ist, die Monomere des Typs Dialkylaminoalkyl(meth)acrylamid, Diallylamin, Methyldiallylamin und deren quaternäres Ammonium- oder Säuresalz, insbesondere Dimethyldiallylammoniumchlorid (DADMAC), Acrylamidpropyltrimethylammoniumchlorid (APTAC), Methacrylamidpropyltrimethylammoniumchlorid (MAPTAC) umfasst, und dass das nicht ionische Comonomer aus der Gruppe ausgewählt ist, die N-Vinylacetamid, N-Vinylformamid, N-Vinylpyrrolidon und/oder Vinylacetat umfasst.

**6.** Wässrige Lösung nach einem der vorhergehenden Ansprüche, **dadurch gekennzeichnet, dass** das Basiscopolymer, an dem die Hofmann-Reaktion durchgeführt wird, Monomere enthält, die anionische Ladungen in einem Anteil von unter 5 Mol-% umfassen, und Monomere des Typs Säure oder Anhydrid umfasst, die aus der Gruppe ausgewählt sind, die (Meth)acrylsäure, Acrylamidmethylpropansulfonsäure, Itaconsäure, Maleinanhydrid, Maleinsäure, Methallylsulfonsäure, Vinylsulfonsäure und deren Salze umfasst.

7. Wässrige Lösung nach einem der vorhergehenden Ansprüche, **dadurch gekennzeichnet, dass** das Basiscopolymer, an dem die Hofmann-Reaktion durchgeführt wird, im Beisein eines Verzweigungsmittel, gegebenenfalls eines Transportmittels, verzweigt wird, und dass das Verzweigungsmittel aus der Gruppe ausgewählt ist, die Methylenbisacrylamid, Ethylenglycoldiacrylat, Polyethylenglycoldimethacrylat, Diacrylamid, Cyanomethylacrylat, Vinyloxyethylacrylat oder -methacrylat, Triallylamin, Formaldehyd, Glyoxal, Zusammensetzungen des Typs Glycidylether wie Ethylenglycoldiglycidether und/oder Epoxide umfasst.

8. Wässrige Lösung nach einem der vorhergehenden Ansprüche, **dadurch gekennzeichnet, dass** das Polymer eine kationische Ladungsdichte von über 3 meq/g, vorzugsweise über 5 meq/g hat.

9. Wässrige Lösung nach einem der vorhergehenden Ansprüche, **dadurch gekennzeichnet, dass** die wässrige Lösung, die das Basispolymer umfasst, darüber hinaus einen Zusatzstoff enthält, der aus der Gruppe der Moleküle ausgewählt ist, die Hydroxyl- und/oder Aminfunktionen tragen, wie etwa Alkohole, Polyole, Polyoside, Polyamine und/oder Polyethylenimin.

10. Wässrige Lösung nach Anspruch 9, **dadurch gekennzeichnet, dass** das Polyol Stärke ist.

11. Verfahren zur Herstellung eines Papier- und/oder Kartonbogens und dergleichen, gemäß dem vor der Ausbildung des genannten Bogens, einer Fasersuspension getrennt oder im Gemisch in einer beliebigen Zugabereihenfolge an einer oder mehreren Einspritzstelle/n mindestens zwei Trockenfestigkeitsmittel zugesetzt werden, und zwar:

    - ein erstes Mittel, das einer wässrigen Lösung entspricht, die den Gegenstand eines der Ansprüche 1 bis 10 bildet;
    - und ein zweites Mittel, das einem (Co)polymer entspricht, das eine anionische Ladungsdichte von über 0,1 meq/g hat.

12. Verfahren nach Anspruch 11, **dadurch gekennzeichnet, dass** das zweite Mittel gewonnen wird ausgehend von:

    - 1 bis 100 Mol-% mindestens eines Monomers, das eine anionische Ladung besitzt,
    - und 0 bis 99 Mol-% mindestens eines Monomers, das eine neutrale oder kationische Ladung besitzt.

13. Verfahren nach Anspruch 12, **dadurch gekennzeichnet**, es sich bei den Monomeren, die eine anionische Ladung besitzen, um Monomere handelt, die eine Carboxylfunktion besitzen, die aus der Gruppe ausgewählt ist, die Acrylsäure, Methacrylsäure und deren Salze usw. umfasst und/oder eine Sulfonsäurefunktion besitzen die aus der Gruppe ausgewählt ist, die 2-Acrylamid-2-Methylpropansulfonsäure (AMPS), Vinylsulfonsäure, Methallylsulfonsäure und deren Salze usw. umfasst, oder um nicht ionische Monomere, die aus der Gruppe ausgewählt sind, die umfasst: Acrylamid, Methacrylamid, N-N-Dimethylacrylamid, N-Vinylpyrrolidon, N-Vinylacetamid, N-Vinylformamid, Vinylacetat, Acrylatester, Allylalkohol usw., und/oder um kationsiche Monomere, die aus der Gruppe ausgewählt sind, die Dimethylaminoethylacrylat (ADAME) und/oder Dimethylaminoethylmethacrylat (MADAME) in quaternisierter oder in Salz überführter Form, Dimethyldiallylammoniumchlorid (DADMAC), Acrylamidpropyltrimethylammoniumchlorid (APTAC) und/oder Methacrylamidpropyltrimethylammoniumchlorid (MAPTAC) umfasst.

14. Verwendung einer wässrigen Lösung nach einem der Ansprüche 1 bis 10 als Festigkeitsmittel für Papier oder Koagulationsmittel.

## Claims

1. An aqueous solution comprising a cationic copolymer obtained by Hofmann rearrangement in aqueous solution in the presence of an alkali and/or alkaline earth hydroxide and an alkali and/or alkaline earth hypohalide, on a base copolymer comprising:

    - at least 5 mole % of a non-ionic monomer selected from the group comprising acrylamide (and/or methacrylamide), N,N dimethylacrylamide and/or acrylonitrile,
    - and at least one unsaturated cationic ethylenic comonomer and/or a non-ionic comonomer which is not acrylamide (and/or methacrylamide), N,N dimethylacrylamide and/or acrylonitrile,
    - **characterized in that** it has a desalination coefficient (Cd) higher than 0.6, preferably higher than 0.65, advantageously higher than 0.7, with Cd equal to:

$$\frac{\textit{Real polymeric active matter (in weight \%)} \times \textit{Polymer filler density}}{\textit{Conductivity of the solution containing 9\% of active matter}}$$

**2.** An aqueous solution according to Claim 1, **characterized in that** the alkali and/or alkali-earth hypohalide/non-ionic monomer ratio (alpha coefficient) is higher than 0.5, preferably higher than 0.9 and advantageously equal to 1.

**3.** An aqueous solution according to either of the preceding claims, **characterized in that** it is produced in a concentration higher than 8% by weight, preferably higher than 10% by weight, advantageously higher than 12% by weight.

**4.** An aqueous solution according to one of the preceding claims, **characterized in that** the copolymer on which the Hofmann rearrangement is carried out has a molecular weight above 5000 g/mol.

**5.** An aqueous solution according to one of the preceding claims, **characterized in that** the unsaturated cationic ethylenic comonomer is selected from the group comprising monomers of the dialkylaminoalkyl (meth)acrylamide, diallylamine, methyldiallylamine type and quaternary ammonium salts thereof, or of acids, in particular dimethyldiallylammonium chloride (DADMAC), acrylamidopropyltrimethylammonium chloride (APTAC), methacrylamidopropyltrimethylammonium chloride (MAPTAC), and **in that** the non-ionic comonomer is selected from the group comprising N-vinyl acetamide, N-vinyl formamide, N-vinylpyrrolidone and/or vinyl acetate.

**6.** An aqueous solution according to one of the preceding claims, **characterized in that** the base copolymer on which the Hofmann rearrangement is carried out contains monomers comprising anionic fillers in a concentration lower than 5 moles % and comprises monomers of the acid or anhydride type selected from the group comprising (meth)acrylic acid, acrylamidomethylpropane sulphonic acid, itaconic acid, maleic anhydride, maleic acid, methallyl sulphonic acid, vinyl-sulphonic acid and salts thereof.

**7.** An aqueous solution according to one of the preceding claims, **characterized in that** the base copolymer on which the Hofmann rearrangement is branched in the presence of a branching agent, optionally a transfer agent, and **in that** the branching agent is selected from the group comprising methylene bisacrylamide, ethylene glycol di-acrylate, polyethylene glycol dimethacrylate, diacrylamide, cyanomethylacrylate, vinyloxyethylacrylate or methacrylate, triallylamine, formaldehyde, glyoxal, compounds of the glycidylether type such as ethyleneglycol diglycidylether and/or epoxies.

**8.** An aqueous solution according to one of the preceding claims, **characterized in that** the polymer has a cationic filler density higher than 3 meq/g, preferably higher than 5 meq/g.

**9.** An aqueous solution according to one of the preceding claims, **characterized in that** the aqueous solution comprising the base polymer further contains an additive selected from the group of molecules carrying hydroxyl and/or amine functions such as alcohols, polyols, polyosides, polyamines and/or polyethylene imine.

**10.** An aqueous solution according to Claim 9, **characterized in that** the polyol is starch.

**11.** Method for fabricating a sheet of paper and/or cardboard and similar, whereby, before the formation of the said sheet, at least two dry strength agents are added to the fibrous suspension, separately or in a mixture, in any order of introduction, at one or more injection points, respectively:

- a first agent corresponding to an aqueous solution that is the subject matter of one of Claims 1 to 10,
- and a second agent corresponding to a (co)polymer having an anionic filler density higher than 0.1 meq/g.

**12.** Method according to Claim 11, **characterized in that** the second agent is obtained from:

- 1 to 100 molar % of at least one monomer having an anionic filler,
- and 0 to 99 molar % of at least one monomer having a neutral or cationic filler.

**13.** Method according to Claim 12, **characterized in that** the monomers having an anionic filler are monomers having a carboxylic function selected from the group comprising acrylic acid, methacrylic acid, and salts thereof, and/or having a sulphonic acid function selected from the group comprising 2-acrylamido-2-methylpropane sulphonique

acid (AMPS), vinyl sulphonic acid, methallyl sulphonic acid and salts thereof, and/or non-ionic monomers selected from the group comprising acrylamide, methacrylamide, N,N dimethylacrylamide, N-vinyl pyrrolidone, N-vinyl acetamide, N-vinyl formamide, vinylacetate, acrylate esters, allyl alcohol, and/or cationic monomers selected from the group comprising dimethylaminoethyl acrylate (ADAME) and/or dimethylaminoethyl methacrylate (MADAME), quaternized or salified, dimethyldiallylammonium chloride (DADMAC), acrylamido propyltrimethyl ammonium chloride (APTAC) and/or methacrylamido propyltrimethyl ammonium chloride (MAPTAC).

**14.** Use of an aqueous solution according to any one of Claims 1 to 10 as strengthening agent for paper or coagulant.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 579222 A
- EP 377313 A
- US 2004118540 A
- WO 2006075115 A
- JP 57077398 B